# EUROPEAN PATENT APPLICATION

(11) **EP 3 751 919 A1**
(43) Date of publication of application: **16.12.2020**
(21) Application number: 19179909.7
(22) Date of filing: 13.06.2019
(51) Int. Cl.: H04W 64/00, H04W 4/02, A24F 47/00

(54) **A SYSTEM AND METHOD FOR MANAGING A SMOKING SUBSTITUTE DEVICE**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

A system and method are provided for managing a smoking substitute device. The method is performed by an application installed on a mobile device, wherein the application is for assisting a user with a smoking substitute device, and wherein a wireless communication link has been established between the smoking substitute device and the mobile device. The method comprises using a location component included in the mobile device to determine a dropped connection location, if the wireless communication link between the smoking substitute device and the mobile device is lost, wherein the dropped connection location comprises a location of the mobile device at which the wireless communication link was lost, and displaying the dropped connection location to a user via a display of the mobile device.

## Description

### TECHNICAL FIELD

The present invention relates to smoking substitute devices. In particular, although not exclusively, it relates to the management of network-enabled smoking substitute devices and their communication with other devices, and to locating a network-enabled smoking substitute device.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece. The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco p.l.c. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

The present inventor(s) have also observed that, as smoking substitute devices become more sophisticated and are able to perform more functions, they may require more sophisticated management. Moreover, improved management should enable the user to enjoy enhanced functionality and convenience, in relation to their smoking substitute device.

The present invention has been devised in light of the above considerations.

### Summary of the Invention

At its most general, the present invention provides a system, method, computer implemented method, computer program and devices, which enable a network-enabled smoking substitute device (that is, a smoking substitute device that is capable of wireless communication with other devices) to be managed in a secure and user-controllable manner. In particular, the smoking substitute device can be located efficiently and easily, to reduce the risk of it being misplaced, lost or stolen, and to make it more readily available to the user, when he or she wishes to use it. This is done via a method which embraces and incorporates the known existing functionality of mobile devices such as mobile phones, smart phones, laptop computers and tablet computers, to which the smoking substitute device can connect, and which does not impose undue processing demands or physical space demands on the smoking substitute device itself.

The user can use the location of the mobile device, with which the smoking substitute device has established a wireless communication link, in order to determine the location of his or her smoking substitute device. For example, a determined location of the mobile device may be recorded as a proxy location of the smoking substitute device in certain circumstances, e.g. when a wireless communication link between the mobile device and the smoking substitute device is established or lost, or periodically while the wireless communication link is live.

It is known for mobile devices such as mobile phones, smart phones, laptop computers and tablet computers to include one or more location components such as a GPS (Global Positioning System) component. If an application is running on a mobile device that includes a location component, the location component may be configured to transmit information regarding the location of the mobile device to the application, or to at least make such information accessible to the application. Therefore, the application may be configured to record and store location information for the mobile device over a period of time, and/or to access location information that may be stored on the smoking substitute device and/or on the mobile device, either regularly or on demand.

The present invention embodies the recognition that an application may be installed and run on a mobile device, wherein that application is configured for management of a smoking substitute device, and wherein that application is further configured to have access to location information for the mobile device. The present invention also embodies the further recognition that, if a wireless communication link is established between a mobile device and a smoking substitute device, the distance range over which the two devices will be able to successfully communicate with one another, via that wireless communication link, will be limited. Therefore, if the wireless communication link between the two devices is active, and the application can determine the location of the mobile device, the user will be able to use that location information for the mobile device in order to determine the location of his or her smoking substitute device, at least to within a manageable distance range. Moreover, it is likely that, as part of his or her day-to-day routine, the user may store, carry or place relatively small devices that he or she uses on a repeated basis throughout the day, such as a mobile device and a smoking substitute device, relatively near to one another. For example, both devices may be stored in a user's pocket or bag, or the user may habitually place such devices on the same surface or in the same drawer, when he or she is at home or at work. Therefore, if the mobile device can be found, there is a likelihood that the smoking substitute will be found nearby.

The present inventor(s) have recognised that, if a user cannot find his or her smoking substitute device, he or she can use the location information for the mobile device with which the smoking substitute device has established a wireless communication link, in order to narrow down the possible locations of the smoking substitute device. If the wireless communication link between the smoking substitute device and the mobile device is still active, this will enable the user to determine the location of the smoking substitute device as being physically remote from the mobile device by no more than the maximum permitted distance range, for those wireless communications.

If, on the other hand, the wireless communication link between the smoking substitute device and the mobile device has been lost, the location information for the mobile device can still be used. In one example, the application may be configured to record (or have access to) location information for the mobile device, over time, and it is further configured to record or access information regarding the times at which, or time periods over which, the wireless communication link between the mobile device and smoking substitute device is/was active. Therefore, the application can correspond the location of the mobile device at a particular time to whether or not the wireless communication link is/was active at that time. This enables it, at a given time at which the wireless communication link between the mobile device and smoking substitute device is found to be lost (i.e. a time at which the connection between the two devices has dropped), to determine the most recent location of the mobile device, at which it was wirelessly connected to the smoking substitute device, before that wireless communication link was lost. The user can use that most recent location, and/or the information on the time at which the devices were last connected, in order to guide his or her search for the smoking substitute device. This should enable the user to find his or her smoking substitute device more easily and more quickly and reduce the risk of the device being lost misplaced or stolen and of it being damaged, for example if it has been dropped on the floor or otherwise placed in a potentially dangerous position.

In another example, an application on the mobile device may run a background process to monitor the status of the wireless communication link with the smoking substitute device. The background process may be configured to record location information for the mobile device upon detecting a change in the status of the wireless communication link, e.g. a connection event or a dropped connection event. The application may store the recorded location information in a log so that a user can access information about the location of connection events with the smoking substitute device.

According to a first aspect of the invention, there may be provided a method performed by an application installed on a mobile device, wherein the application is for assisting a user with a smoking substitute device via a wireless communication link established between the smoking substitute device and the mobile device, the method comprising: determining, by a location component in the mobile device, a dropped connection location indicative of a location of the mobile device at which the wireless communication link was lost; and displaying the dropped connection location to a user using a display of the mobile device. The dropped connection location may comprise a location of the mobile device at which the wireless communication link was lost, or a 'most recent' location at which the mobile device recorded the existence of a wireless communication link with the smoking substitute device.

According to a second aspect of the invention, there may be provided a computer readable medium containing instructions which, when executed by an application installed on a mobile device, are configured to cause the application to perform the method above.

According to a third aspect of the invention, there may be provided a mobile device including: a display; a processor configured to run an application for assisting a user with a smoking substitute device; a location component; and a wireless interface; wherein the wireless interface is configured to establish a wireless communication link between the smoking substitute device and the mobile device, and wherein the mobile device is configured to: determine, via the location component, a dropped connection location indicative of a location of the mobile device at which the wireless communication link was lost; and display the dropped connection location to a user using a display of the mobile device.

According to a fourth aspect of the invention, there may be provided a system comprising: a mobile device; and a smoking substitute device, wherein the mobile device comprises: a display; a processor configured to run an application for assisting a user with the smoking substitute device; a location component; and a first wireless interface, wherein the smoking substitute device comprises a second wireless interface, wherein a wireless communication link is established between the first and second wireless interfaces, and wherein the mobile device is configured to: determine, via the location component, a dropped connection location indicative of a location of the mobile device at which the wireless communication link was lost; and display the dropped connection location to a user using a display of the mobile device.

In any of these aspects, the smoking substitute device may be network-enabled, in that it comprises a wireless interface which can communicate wirelessly, via a wireless network, with the communication terminal of the mobile device. Communication can be, for example, over a short-range network or protocol, such as Bluetooth™.

The term "lost" in relation to a wireless communication link may mean that the wireless communication link between the two devices is absent, e.g. discontinued, usually temporarily, or has become inactive, such that a wireless signal cannot be successfully transmitted by the first wireless interface, for example on the mobile device, and received by the second wireless interface, for example on the smoking substitute device, or vice versa. This occurrence may also be referred to as the (wireless) connection between the two devices being "dropped".

A wireless communication link may be "lost" if, for example, the two devices are separated by too great a distance, which exceeds the maximum permitted distance range for the type of wireless signals that the devices are configured to transmit and receive. Alternatively, the wireless communication link may be "lost" if, for example, the wireless capability of one or both of the devices is switched off, meaning that the wires interface of the relevant device(s) could not function, at that time. This may occur due to a deliberate action by the user, in that the mobile device and/or the smoking substitute device may include an actuator or other input mechanism, via which the user can switch the wireless capability of the respective device on and off. Alternatively, it may occur due to an operational failure within a device, which means its wireless interface cannot function correctly. Alternatively, switching off of the wireless capability of, for example, the smoking substitute device may occur when it is in a particular operating mode, for example a low power operating mode, wherein operation of non-core functions of the device may be switched off automatically, to conserve battery power.

The term "dropped connection location" may mean a location that the location component data indicates as being the location of the mobile device, at a time at which the wireless connection between the mobile device and the smoking substitute device was "dropped". It may be the location of the mobile device at the most recent time at which the connection was dropped (i.e. at which the link was lost), if the link has been lost multiple times. Alternatively, in examples where the location component data records locations at which the wireless communication link exists, the dropped connection location may be the location of the last recorded connection.

The steps for establishing a wireless communication link between the smoking substitute device and a mobile device may follow any suitable protocol. For example, if Bluetooth™ is used, the user can activate the Bluetooth™ functionalities of the smoking substitute device and of his or her selected mobile device, with which a wireless communication link is to be established, and the two devices can identify themselves to one another, exchange Bluetooth™ messages, and form a wireless communication link. The exchange should preferably involve suitable security steps, to ensure that the correct two devices form the wireless communication link. For example, the two devices may form a paired wireless communication link, which is secure, and which is an exclusive communication link, between those two individual devices. In order to form a paired wireless communication link, the devices should exchange security data such as encryption keys, passwords or codes. The devices may each be configured to store the encryption key received from the respective other, and to re-use that encryption key each time a connection between the two devices is required. This is known as establishing a bonded wireless communication link.

The steps for establishing a wireless communication link between the smoking substitute device and a mobile device may comprise any suitable combination of user-implemented, computer-implemented and hardware-implemented steps. For example, specific user input should be required in order to identify the mobile device, with which the smoking substitute device may establish a wireless communication link. However, some or all of the steps involved in establishing wireless communication links between the smoking substitute device and the mobile device(s), and the subsequent wireless transmissions between the devices, may happen without any specific user input being required.

When a mobile device has established a wireless communication link with a smoking substitute device, the devices may share data via that link. For example, the smoking substitute device may submit data regarding some of its hardware components, such as its battery, to the mobile device. An application running on the mobile device may access some of that data for storage, or possibly for making determinations - for example, for determining remaining battery power from battery output voltage levels.

The step of displaying the dropped connection location may be performed upon receiving a request at the mobile device. For example, the application may include an option to "find my device". The step of determining the dropped connection location may be performed upon receiving the request. As explained below, the application may be arranged to run a process (e.g. in the background) that records events to assist in determining the dropped connection location.

In one example, the method further comprises: monitoring, by the application, a status of the wireless communication link; and recording, in a log on the mobile device, a location of the mobile device obtained from the location component upon detecting that the wireless communication link is lost. The step of determining the dropped connection location may thus comprises reading an entry, e.g. the most recent entry, from the log. The log may be configured to store only one entry, which is overwritten each time the wireless communication link is lost.

The log may record a location or a data structure indicative of location. For example, the method may further comprise recording, in a log on the mobile device, a location identifier associated with activity on the wireless communication link. This activity need not be limited to loss of the wireless communication link. The step of determining the dropped connection location may comprise reading an entry from the log and obtaining a location corresponding to the location identifier. The location identifier may be a time stamp. For example, the mobile device may store telemetry data that includes a history of the location of the mobile device over time. The step of obtaining a location corresponding to the location identifier may therefore comprise determining a location from the telemetry data using the time stamp read from the log.

The application may also determine a dropped connection time, wherein the dropped connection time comprises a time at which the wireless connection between the smoking substitute device and the mobile device was lost, and the dropped connection time may be displayed to the user via a display of the mobile device.

Herein, the "time" at which the wireless communication link has been lost, or the connection dropped, may not be an instantaneous time. It may comprise a time range. For example, the magnitude of a first time interval between points when the location component determines the location of the mobile device may not be the same as a second time interval between points when the mobile device and smoking substitute device are configured to transmit or receive signals from one another. For example, the first time interval may be different from a predetermined time-out period for the wireless communication link, i.e. an amount of time required to elapse before the mobile device means determines that the wireless communication link has been lost or dropped. The "time", as determined by the application, at which the wireless communication link has been lost, or the connection dropped, may comprise a time range or period, which may represent the intersection or overlap between the time (interval) at which the wireless communication link is determined to have been lost and the closest time (interval) for which location of the mobile device has been determined, by the location component. The "time" may comprise, for example, a midpoint of a time period or an average of two or more time intervals.

The step of displaying the dropped connection location to a user via a display of the mobile device may comprise displaying the dropped connection location on a map. For example, the dropped connection location may be shown as a pointer or other marker on a map. The map may also show the user's current location.

Alternatively, or additionally, the dropped connection location may be displayed to the user, via a display of the mobile device, as an address and/or as GPS coordinates. The user may be able to provide inputs to the application, to select how the dropped connection location should be displayed.

The location component included in the mobile device, which is used to determine a dropped connection location, may comprise a GPS (Global Positioning System) device.

The location component may be configured to report location information for the mobile device, to the application, using any suitable steps and at any suitable time intervals. Such location information may be updated at regular intervals. The application may be configured so that the user can select whether and under what conditions the application can access location information, from the location component. The application may be configured so that the user can select whether it has access to location information, from the location component, at all times or, for example, just when the application is open on the user's mobile device. Alternatively, the application may be configured to only access location data from the location component when there is a specific user command to the application, that requires the output of location data.

According to an embodiment, the application may be granted access to location information, from the location component, at all times, or at least at regular intervals, regardless of whether the application is open on the user's mobile device. This may help enable the application to determine a location of the mobile device at a time at which a wireless communication link between the smoking substitute device and the mobile device was lost, regardless of whether the application was open on the mobile device, at that time.

If the wireless communication link is, for example, a bonded wireless communication link, which is an ongoing, secure wireless communication link between the two devices, there may be different options as to what 'mode' the wireless interfaces of the two devices operate in, as regards how often they transmit messages to one another, and how often they look for messages from the respective other. For example, they may be configured to be in an "active mode" in which at least one device is actively transmitting (and the respective other device actively receiving) data at regular intervals. Alternatively, they may be configured to be in a power-saving mode, where the devices are less active. For example, in such a mode (which may be referred to as a "sniff mode") the wireless interfaces of the device(s) may only listen for transmissions from one another at a set interval (e.g. every 100ms), and sleep in between. Alternatively, they may be configured, at certain times at least, to be in a "hold mode", which may be a temporary, power-saving mode wherein the wireless interface of a device sleeps for a defined period and then returns back to active mode when that interval has passed. Alternatively, they may be configured, at certain times at least, to be in a "park mode" which is a deep sleep mode for the wireless interface(s). For example, the mobile device (or an application running on the mobile device) may instruct the smoking substitute device to enter "hold mode" or "park mode" for operational reasons, for example to conserve battery power.

In order to determine whether the wireless communication link between a smoking substitute device and a mobile device has been lost or dropped, a control means on the mobile device, or within the application, may be configured to monitor, or at least to access a record of, the wireless transmissions between the wireless interfaces of the two devices (i.e. of the mobile device and the smoking substitute device). The control means may be configured to determine whether there is a discontinuity or gap in those transmissions, as compared to what would ordinarily be expected for the current operating modes of the wireless interfaces. For example, if the devices are configured to be in an "active mode", the control means may expect the devices to transmit/receive to/from the respective other, at regular time intervals of, for example, 10ms. If the control means detects a time interval of greater than 10ms, it may determine that the wireless communication link has been lost or dropped.

For example, a control means may be configured so that it must detect a gap or discontinuity of more than one "regular" transmission (or transmission opportunity) between the devices, before it determines that the wireless communication link has been lost, or the connection between the devices dropped. For example, the control means may be configured so that it must detect a gap or discontinuity of more than a predetermined amount of time, since the most recent transmission between the devices, before it determines that the wireless communication link has been lost or dropped.

The mobile device, and/or the application, may be configured to alert the user if it has been determined that the wireless communication link has been lost or dropped. For example, if the application determines that the wireless communication link has been lost or dropped, it may alert the user via an output of the mobile device. For example, it may prompt a message to flash up on the screen of the user's mobile device. For example, the application may be configured to determine whether the wireless capability of the smoking substitute device and/or of the mobile device has been deliberately switched off by the user, before it alerts the user that the wireless communication link has been lost or dropped.

The smoking substitute device itself may comprise a control means that is configured to detect if the wireless communication link between it and the mobile device is lost. The smoking substitute device may be configured to issue an alert to the user, if this happens. For example, the alert may comprise a flashing light or a warning message on an LED screen.

The application may be accessible to the user via more than one mobile device. Therefore, if the user misplaces both the mobile device to which the smoking substitute device is linked, and the smoking substitute device itself, he or she may access the application to carry out a method for finding the smoking substitute device via a second, different mobile device. In such an embodiment, the application may output a current location of the mobile device, even if the wireless communication link between it and the smoking substitute device is not currently active. The application may include security features such as user identification and password(s) to help prevent misuse of the method by a non-authorised user.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure 3(a)** is a schematic view of the main body of the smoking substitute device of Fig. 2(a).
**Figure 3(b)** is a schematic view of the consumable of the smoking substitute device of Fig. 2(a).
**Figure 4** is a flowchart of a method for establishing a wireless communication link between a smoking substitute device and a mobile device.
**Figure 5** is a flowchart of a method for locating a smoking substitute device, according to an embodiment of the invention

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

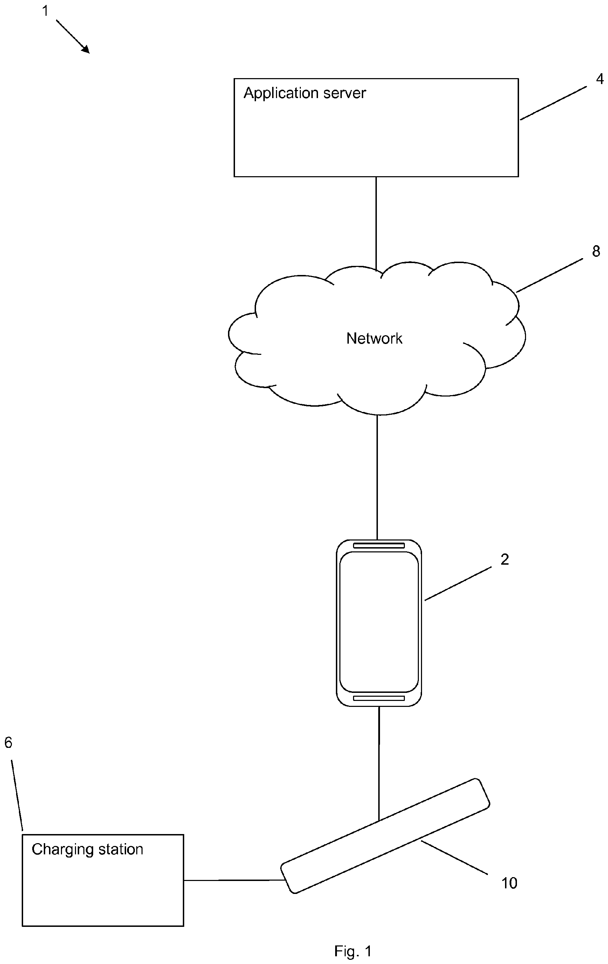

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network. In embodiments of the invention, the mobile device comprises a location tracking component configured to obtain location information for the mobile device, e.g. using GPS or the like. Other types of location components may be included in a mobile device, for example a GLONASS (Global Navigation Satellite System) component.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

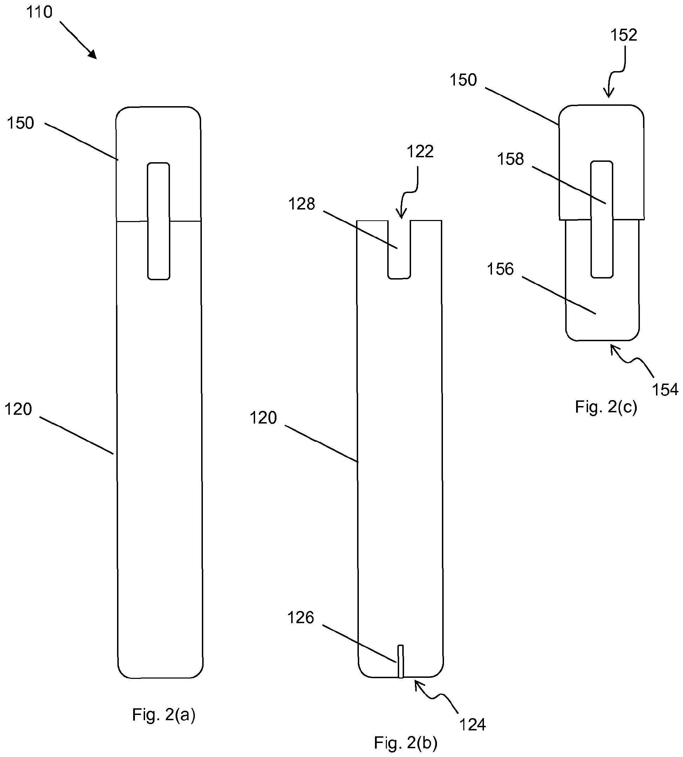

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 302 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

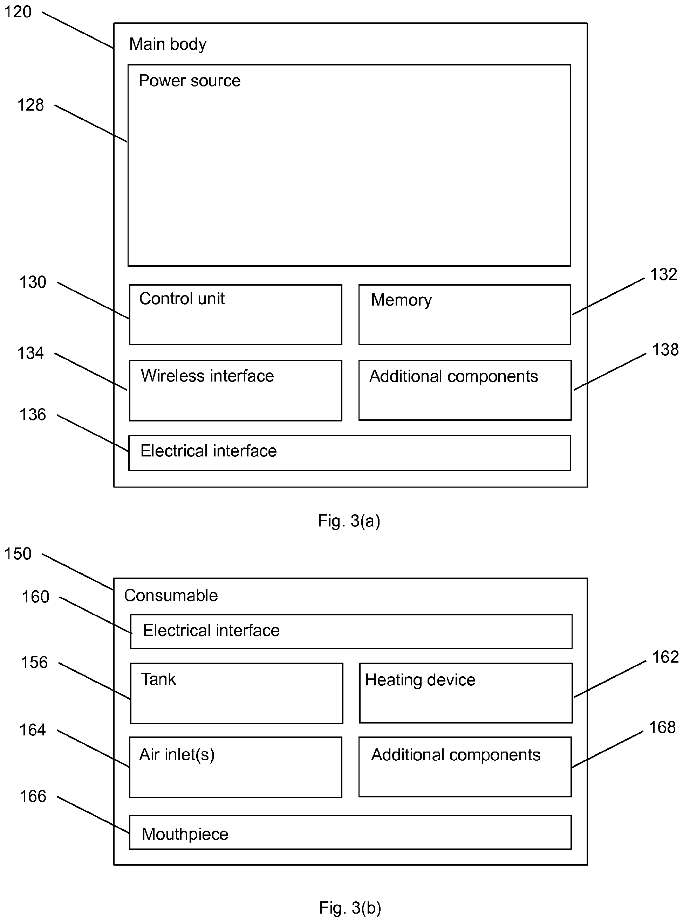

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory.

The wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The electrical interface 136 of the main body 120 may include one or more electrical contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reader configured to read information associated with the consumable from a machine readable data source included in (e.g. contained in the body of, or attached to) the consumable 150.

The reader may be configured to read information from the machine readable data source wirelessly, e.g. via electromagnetic waves or optically. Thus, for example, the machine readable data source included in the consumable 150 could be an RFID tag (in which case the reader included in the main body 120 may be an RFID reader) or a visual data source such as a barcode (in which case the reader included in the main body may be an optical reader, e.g. a barcode scanner). Various wireless technologies and protocols may be employed to allow the reader to wirelessly read information from a machine readable data source included in or attached to the consumable 150, e.g. NFC, Bluetooth, Wi-Fi, as would be appreciated by a skilled person.

For avoidance of any doubt, the reader (if present) may be configured to read information from the machine readable data source non-wirelessly, e.g. using a direct electrical connection between the main body 120 and consumable 150.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reader configured to read information associated with the consumable from the machine readable data source.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

Embodiments of the present invention relate to the management and use of a network-enabled smoking substitute device such as that discussed above in relation to Fig. 1. In particular, they relate to providing a reliable and useful means for locating a user's smoking substitute device, if it has established a wireless communication link with a mobile device, for example a mobile phone, smart phone, laptop computer or tablet computer. The embodiments do not require any additional hardware or software to be incorporated into the smoking substitute device, in order for it to be locatable, as described herein. Instead, the embodiments utilise known, pre-existing functionality of a mobile device, and harness its usefulness in relation to a smoking substitute device with which the mobile device is configured to wirelessly communicate.

As described in more detail below, by using location information from a location component of a mobile device, such as a GPS component, an application running on the mobile device can record and store (or at least access) location information for the mobile device. In addition, by using information from the wireless interface of the mobile device, regarding the wireless transmissions transmitted and received between the mobile device and a smoking substitute device with which it is configured to communicate, the application can record and store (or at least access) telemetry data - such as whether the wireless communication link is in place and operating correctly. The application may operate to correlate location information with the telemetry data in order to match a particular functionality with a particular location. In embodiments of the invention, the functionality of interest is the existence or not of a wireless communication link to a smoking substitute device. The application may thus be used to find a smoking substitute device by determining a location that corresponds to a dropped connection event or a "last known connection" event.

In one example, if the user wishes to find his or her smoking substitute device, he or she can access the application to determine whether the wireless communication link is currently active - i.e. whether or not the connection has been lost or dropped. If the wireless communication link is currently active, the user can infer that the smoking substitute device will be located within the wireless transmission range for the devices and direct his or her search accordingly. If the user discovers that the wireless communication link is not currently active, but has been lost, the application can still assist in locating the smoking substitute device by correlating stored location information with the telemetry data and, as a result, informing the user as to the location of the mobile device, when the communication link to the smoking substitute device was lost. This information can then be used to direct his or her search for the smoking substitute device.

An embodiment will now be described in which a Bluetooth™ connection is employed for communications between a smoking substitute device and a mobile device. Both devices have Bluetooth™ wireless interfaces. However other types of connection are possible, as described above in relation to Fig. 1, and the operational considerations for Bluetooth™ communication will be relevant to other connection types.

The smoking substitute device in the following example embodiment is of the type described above in relation to Figs. 1 and 3(a), which can form a wireless connection to a device running an application, such a mobile phone, smart phone, tablet or laptop computer. At the beginning of the method, it is to be taken that the smoking substitute device does not yet have any established wireless communication links to any specific mobile devices. For the purpose of the described method, it is to be taken that the user has the requisite authority and/or permissions, to implement this method on his or her chosen devices.

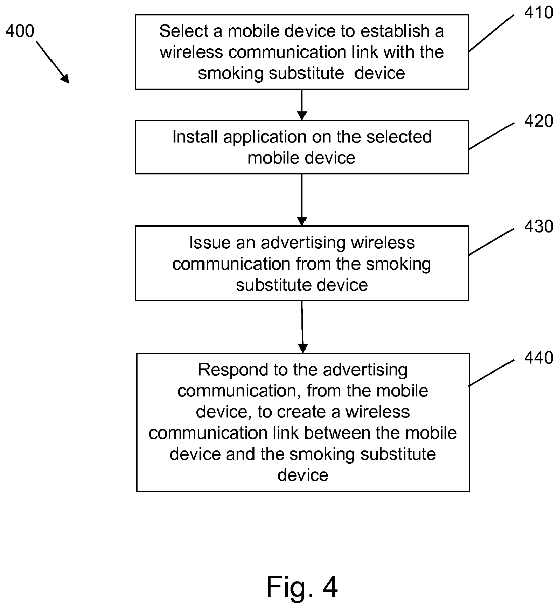

Referring to Fig. 4, at the initial step 410 of the method 400, the user of the smoking substitute device selects a first mobile device, which he or she wishes to use to wirelessly communicate with his or her smoking substitute device. In this embodiment, the selected (first) mobile device comprises the user's mobile phone. It includes a location component, which in this embodiment is a GPS component. Other types of location components may be included in a mobile device, for example a GLONASS (Global Navigation Satellite System) component.

At the second step 420 of the method 400, the user installs an application on the selected mobile device, for managing, and controlling communications with, the smoking substitute device. The process of installing (or "downloading") applications onto mobile devices is well known and will not be described further herein. It is noted that, in almost all cases, there will be at least one security step involved in installing an application onto a mobile device. For example, the user may have to input a password and/or use his or her biometric data such as a fingerprint or thumbprint to show that he or she has the authority and/or permissions to install the application onto the mobile device.

Although step 420 is shown and described as being the second step of the specific method 400 described herein, it may be performed either before or after step 430, detailed below. The establishment of a wireless communication link, as described below for step 430, can be performed without the application being installed on the user's mobile device.

At the next step 430 of the method 400, the user establishes a wireless communication link between the smoking substitute device and the mobile device. At this point, because there are no established communication links between it and any mobile devices, and because it is seeking to establish a communication link rather than seeking to transfer data as yet, the wireless interface (such as the Bluetooth™ antenna) of the smoking substitute device will be operating in a so-called "advertising" mode. It is known for so-called "peripheral" wireless devices, such as a smoking substitute device, which interface with so-called "host" wireless devices, such as a mobile device, to operate in an advertising operating mode, in order to broadcast information defining their intentions. In this case, the intention of the smoking substitute device is to establish a wireless communication link with a host device - i.e. the user's mobile device, on which the relevant application is running.

In order to prompt his or her smoking substitute device to begin operating in an advertising operating mode, the user may take any suitable steps, depending on the particulars of the device. For example, there may be a button or other actuator for switching on the Bluetooth™ capabilities of the device. The device may default to being in an advertising operating mode, when its Bluetooth™ capabilities are switched on, in the absence of any bonded communication links already being in place. For example, there may be a predetermined period of time, after the device is switched on (or Bluetooth™ capabilities are switched on), during which the smoking substitute device will operate in an advertising operating mode. For example, there may be a predetermined period of time after the user performs a certain predetermined input or action, such as shaking or tapping the device, during which it will operate in an advertising operating mode.

Because the smoking substitute device does not yet have an established wireless communication link with any particular mobile device, the advertisement message sent out by the smoking substitute device at step 430 will be a general advertisement message, which is receivable by any host device or potential host device within the wireless communication range of the smoking substitute device, at that time.

The manner in which a wireless interface of a peripheral device, such as a Bluetooth™ antenna, issues advertisement messages is well known and so will not be described in detail herein. In general terms, the user may have to provide an input to the smoking substitute device to activate its Bluetooth™ capabilities, in order for it to be 'found' by the user's mobile device. Or this may happen automatically.

Once the Bluetooth™ advertisement message has been sent by the smoking substitute device, the next step 440 is for the user's mobile device to issue a response, or series of responses, which results in a wireless communication link being formed between the smoking substitute device and the mobile device.

For example, the advertising message issued by the smoking substitute device may include instructions for a mobile device on what it expects or demands in a response from a mobile device, in order for it to connect to the smoking substitute device. The user should ensure that the mobile device, which he or she wishes to connect to the smoking substitute device, has its Bluetooth™ capabilities switched on, so that it can scan for and receive the advertising message from the smoking substitute device. Once the advertising message has been received by the mobile device, it can read the instructions therein and then respond by issuing an advertising message including whatever form of response the smoking substitute device has demanded. When the smoking substitute device has received a satisfactory response from the mobile device, it can then initiate a pairing process, wherein the two devices share an encryption key or other authorisation data, in order to identify each to the other and form a secure wireless communication link between the two devices. When this link has been established, the two devices are "paired". According to the present embodiment, the two devices will store the encryption keys, and reuse them each time they reconnect to one another. Because of this, they establish a "bonded" wireless communication link to one another. However, in other embodiments there need not be a bonded wireless communication link.

It will be appreciated that other protocols may be followed, in order to form a bonded wireless communication link between the smoking substitute device and the mobile device.

Once the bonded wireless communication link has been formed, at step 440, between the smoking substitute device and the user's mobile device, any subsequent advertising messages issued by the wireless interface of the smoking substitute device will be addressed to the user's mobile device. Moreover, any data transfer messages from the smoking substitute device will be directed only to the user's mobile device.

According to some embodiments, it may be possible for the user to permit the establishment of wireless communication links between the smoking substitute device and two or more, different mobile devices. However, for the purpose of illustration, the present embodiment comprises just one bonded wireless communication link, between the smoking substitute device and one mobile device.

The application on the mobile device in this embodiment is configured to have access to telemetry data regarding the wireless transmissions between the smoking substitute device and the mobile device, via the bonded wireless communication link. The application may be configured to record/store the telemetry data and/or it may have permission to access telemetry data that has been recorded/stored on a memory of the mobile device. It may be configured to monitor telemetry data as a function of time. In particular, it may run a background process that is configured to check for any anomalies that indicate that the wireless communication link may have been lost or become inactive. For example, it may compare the actual pattern of intervals (and/or times) at which the wireless communication link is opened up for signal transmission between the two devices, to an expected pattern for the current operating mode of the devices. If the comparison indicates that the wireless communication link is, or has been, inactive or "lost", this may be recorded by the application, along with the time (or time period) for which this inactivity or loss has occurred. The application may check for any anomalies that indicate that the wireless communication link may have been lost or become inactive on a regular basis, as part of its normal operation. Alternatively, it may only check for any anomalies that indicate that the wireless communication link may have been lost or become inactive when prompted to do so by the user.

The application on the mobile device in this embodiment is also configured to have access to location data for the mobile device, as obtained by the GPS component of the mobile device. The application may be configured to record/store the location data within its own memory and/or it may have permission to access location data that has been recorded/stored on a memory of the mobile device. The location data may be stored in any suitable memory type. The location data may comprise any suitable indicator of the mobile device's location as a function of time. For example, it may comprise GPS coordinates and/or locations on a map.

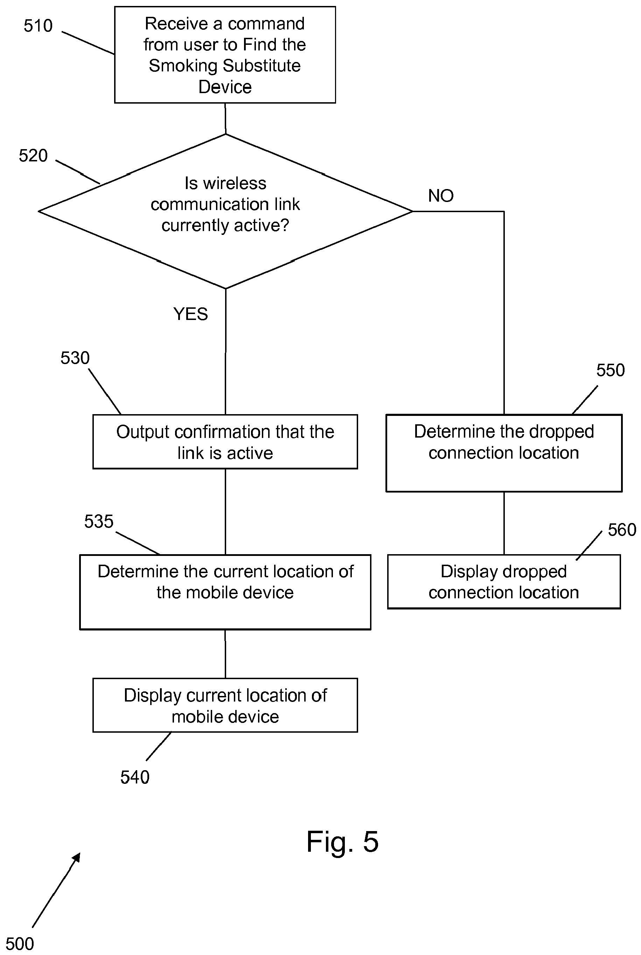

According to the embodiments described herein, a user may use the application on his or her mobile device in order to locate his or her smoking substitute device. This can be further understood in relation to Figure 5, herein.

Referring to the method 500 of Figure 5, at step 510, when the user has decided that he or she is unable to find his or her smoking substitute device, he or she accesses the application, which has an established wireless communication link with the smoking substitute device, and provides a command to the application, via an interface of the mobile device, to indicate that he or she wishes to locate the smoking substitute device. For example, the application may include an icon, displayed on the touchscreen of the user's mobile device, which the user can press to activate the routine for locating his or her smoking substitute device. The icon may comprise a symbol and or it may comprise text such as "Find my device" or any other suitable wording.

When the application has received a command from the user that he or she which is to find the smoking substitute device, at step 520 the application determines whether the wireless communication link between the smoking substitute device and the mobile device is currently active or whether it has been lost. The application can perform such a determination by checking whether the wireless communication link between the two devices is currently operating as expected - for example, checking if the wireless communication link is being opened up for signal transmission between the two devices, at times/intervals that would be expected for the current operating mode of the devices. In order to perform this determination, the application will have to receive, or otherwise access, telemetry data from the wireless interface of the mobile phone. This can be done using any suitable combination of hardware and software means.

If it is determined at step 520 that the wireless communication link between the smoking substitute device and the mobile device is currently active, at step 530 the application will output a message to the user, via an interface of the mobile device that he or she is using, to confirm that the wireless communication link is active.

The particular method shown in Figure 5 comprises two additional steps that can be followed, if the wireless communication link has been found to be active. However, these two steps may be redundant - and therefore may be omitted by the application - if the user is accessing the application via the mobile device, to which the smoking substitute device has established a wireless communication link. That is; there may be no need to tell the user where the mobile device is located, if she or he is currently using that mobile device.

Therefore, steps 535 and 540 below are optional, but may be relevant to embodiments in which the user is accessing the application on a second mobile device, other than the (first) mobile device with which the smoking substitute device has established a wireless communication link.

At step 535, the application will determine the current location of the (first) mobile device. This can be done using any suitable combination of hardware and software means. For example, the application and the location component may be configured so that the location component provides regularly spaced, frequent updates to the application comprising location data for the mobile device. Alternatively, the application may be configured to access the location data only when there is a specific need, such as when the user wishes to find his or her smoking substitute device, in accordance with this method 500.

At step 540, the application will output the current location of the (first) mobile device, via an interface of the mobile device that the user is currently using.

The application may automatically determine and output the current location of the mobile device, after it has confirmed that the wireless communication link is currently active. Alternatively, the application may require a specific command from the user before it determines and outputs the current location of the mobile device. This may be because, for example, if the user is accessing the application from the (first) mobile device, with which the smoking substitute device has established a wireless communication link, steps 535 and 540 would be deemed by most users to be redundant.

According to another possible embodiment, the application will omit step 530 and will simply determine and output the current location of the mobile device, if it has determined that the wireless communication link is currently active. Alternatively, the application may be configured to output confirmation that the link is active at the same time as out putting the current location of the mobile device.

The user will be able to use the information that the link is active (and, if required and therefore provided, the information on the current location of the (first) mobile device) to determine that the smoking substitute device must be located relatively near to his or her mobile device and will be able to direct the further search for his or her smoking substitute device accordingly.

Returning to Fig. 5, if at step 520 the application determines that the wireless communication link between the smoking substitute device and the mobile device is no longer active, the application then at step 550 determines a dropped connection location. The dropped connection location may be stored in the mobile device, e.g. in a log of location data associated with lost connection events. Determining the dropped connection location may comprise returning the most recent entry from this log. In another example, the location data in the log may be associated with communication events. In this case, determining the dropped connection location may comprise returning the most recent entry from this log.

In another example, determining the dropped connection location may include accessing the telemetry data for the wireless interface of the mobile device to determine when the connection between the smoking substitute device and the mobile device was lost or dropped. For example, the application may look for an indication of the time "t" of the most recent wireless transmission between the two devices. This can be done using any suitable combination of hardware and software means. The wireless interface and application may be configured so that the wireless interface provides regularly spaced, frequent updates to the application, comprising telemetry data which can be stored by the application. Alternatively, the application may only access such telemetry data from the wireless interface in response to a specific user need or command. When the application has determined a time "t" (or a time interval) at which the wireless communication link became inactive, it can use that time "t" (or a time interval) to access a log of device location data (i.e. non-event specific location data), obtained by the location component for the mobile device, in order to ascertain the location of the mobile device at the time "t" (or within the time interval) at which the wireless communication link became inactive. This location is may be determined to be the dropped connection location. The application may already have location data stored on its memory, as a function of time, based on signals previously transmitted to it from the location component, or it may be configured to access stored location data on the mobile device in response to a specific user need or command.

At step 560 the application displays the determined dropped connection location to the user. The application may also provide an output to the user, via an interface of the mobile device, to indicate that the wireless communication link between smoking substitute device and the mobile device is currently inactive or lost.

The application may not provide a specific output to explicitly inform the user that the wireless communication link was lost, or has become inactive. Instead that information may be inferred by the user form the output of a dropped connection location for the mobile device.

Optionally, the application may also output the time at which the loss of connection between the two devices occurred. This may happen automatically or in response to a user request for the time information. The time "t" may be represented, in an output to the user, as an instantaneous time - for example, it may be the midpoint of a determined time interval. Alternatively, the time "t" may be represented by a time range or time interval, if and when it is output to the user via an interface of a mobile device.

Once the user knows where the mobile device was when the wireless communication link between it and the smoking substitute device was lost (i.e. the "dropped connection location"), he or she may use the information in order to inform his or her subsequent search for the smoking substitute device. The user may also find it useful to be informed of the time at which the wireless communication link was lost, as that information may also help too prompt the users recall as to where the smoking substitute device may have been left (or at least were it may have been lost or stole from, if ether of those events has indeed occurred.)

Therefore, a useful and user-friendly method is provided for locating a smoking substitute device that has established a wireless communication link with a mobile device. The smoking substitute device itself needs no additional hardware or software features, in order for this method to be carried out. The method enables the user to save time and potentially to safeguard his or her device from being lost, stolen or damaged.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A method performed by an application installed on a mobile device, wherein the application is for assisting a user with a smoking substitute device via a wireless communication link established between the smoking substitute device and the mobile device, the method comprising:
determining, by a location component in the mobile device, a dropped connection location indicative of a location of the mobile device at which the wireless communication link was lost; and
displaying the dropped connection location to a user using a display of the mobile device.

2. The method of claim 1, wherein the step of displaying the dropped connection location is performed upon receiving a request at the mobile device.

3. The method of claim 1 or 2, wherein the method further comprises:
monitoring, by the application, a status of the wireless communication link; and
recording, in a log on the mobile device, a location of the mobile device obtained from the location component upon detecting that the wireless communication link is lost.

4. The method of claim 3, wherein the step of determining the dropped connection location comprises reading an entry from the log.

5. The method of claim 1 or 2, wherein the method further comprises recording, in a log on the mobile device, a location identifier associated with activity on the wireless communication link, and wherein the step of determining the dropped connection location comprises reading an entry from the log and obtaining a location corresponding to the location identifier.

6. The method of claim 5, wherein the mobile device stores telemetry data that includes a history of the location of the mobile device over time, wherein the location identifier is a time stamp, and wherein the step of obtaining a location corresponding to the location identifier includes determining a location from the telemetry data using the time stamp read from the log.

7. The method of any preceding claim, wherein the step of displaying the dropped connection location to a user via a display of the mobile device comprises displaying the dropped connection location on a map.

8. The method of any preceding claim, wherein the step of displaying the dropped connection location to a user via a display of the mobile device comprises displaying the dropped connection location as an address.

9. The method of any preceding claim, wherein the step of displaying the dropped connection location to a user via a display of the mobile device comprises displaying the dropped connection location as GPS coordinates.

10. The method of any preceding claim, wherein the location component included in the mobile device comprises a GPS device.

11. The method of any preceding claim, wherein the wireless communication link between the smoking substitute device and the mobile device uses a short-range communication protocol.

12. A computer readable medium containing instructions configured to, when executed by an application installed on a mobile device, cause the application to perform a method according to any preceding claim.

13. A mobile device including:
a display;
a processor configured to run an application for assisting a user with a smoking substitute device;
a location component; and
a wireless interface;
wherein the wireless interface is configured to establish a wireless communication link between the smoking substitute device and the mobile device, and
wherein the mobile device is configured to:
determine, via the location component, a dropped connection location indicative of a location of the mobile device at which the wireless communication link was lost; and
display the dropped connection location to a user using a display of the mobile device.

14. A system comprising:
a mobile device; and
a smoking substitute device,
wherein the mobile device comprises:
a display;
a processor configured to run an application for assisting a user with the smoking substitute device;
a location component; and
a first wireless interface,
wherein the smoking substitute device comprises a second wireless interface,
wherein a wireless communication link is established between the first and second wireless interfaces, and
wherein the mobile device is configured to:
determine, via the location component, a dropped connection location indicative of a location of the mobile device at which the wireless communication link was lost; and
display the dropped connection location to a user using a display of the mobile device.
